# EUROPEAN PATENT APPLICATION

(11) **EP 4 741 641 A1**
(43) Date of publication of application: **13.05.2026**
(21) Application number: 25174063.5
(22) Date of filing: 02.05.2025
(51) Int. Cl.: F01N 3/20, F01N 9/00

(54) **AMMONIA GASIFIER FOR A SELECTIVE CATALYTIC REDUCTION DEVICE, AND ASSOCIATED SYSTEMS AND METHODS**

(30) Priority: 06.11.2024 US 202463716837 P
(71) Applicant: Safety Power Inc., Mississauga ON L4W 5A1 (CA)
(72) Inventor: Stelzer, Robert M, Mississauga (CA); Puthuparampil, Jobin, Mississauga, L4W 5A1 (CA); Pong, Henry Ho Yin, Mississsauga, L4W 5A1 (CA); Ostaltsov, Andrey, Mississauga, L4W 5A1 (CA)
(74) Representative: Slingsby Partners LLP

(57) **Abstract**

Provided are embodiments for apparatuses, systems and methods for reducing emissions in an exhaust gas flow of an engine, the apparatus comprising: a reactor vessel positioned externally from the exhaust gas flow, the reactor vessel comprising an inlet and an outlet, the outlet in communication with the exhaust gas flow; an injector positioned within the reactor vessel, the injector receiving a reductant flow from the inlet of the reactor vessel and combining the reductant flow with a pressurized gas flow to generate a reductant spray; and an ammonia generation means within the reactor vessel, the ammonia generation means generating a gaseous reductant flow from the injected reductant flow, the gaseous reductant flow transmitted into the exhaust gas flow via the outlet of the reactor vessel.

## Description

### CROSS-REFERENCE TO RELATED APPLICATIONS

The present application claims priority to US Provisional Application 63/716,837 filed Nov 6th 2024.

### FIELD

The present invention relates generally to exhaust gas emission control for combustion devices such as boilers, generators and internal combustion engines. More specifically, the present embodiments are directed to an ammonia gasifier (and associated systems and methods) that efficiently reduce Nitrogen Oxides (NOx) emissions of the exhaust-gas flow associated with these combustion devices.

### BACKGROUND

Exhaust gas emission control has become particularly important due to stringent regulatory emission limits on boilers, generators and reciprocating engines. A typical exhaust gas after-treatment system may comprise many different individual emission reduction functions in order to meet the regulatory emission standards. More specifically, the selective catalytic reduction (SCR) device is frequently used in the exhaust system of combustion devices to eliminate particles of nitrogen oxides (NOₓ) in the exhaust gas. The SCR device is normally located in the exhaust system downstream of the combustion that takes place in a boiler, generator or reciprocating engine. The SCR device contains a SCR catalyst to reduce NOₓ, particles in the exhaust gas as the SCR catalyst must be heated before it can be used to reduce NOₓ, particles. In other words, until the SCR catalyst reaches an activation temperature, which is the minimum temperature to which the SCR catalyst must be heated, the SCR catalyst does not provide NOₓ, emission reduction. Although the hot exhaust gas from the combustion in a boiler, generator or reciprocating engine heats up the SCR Catalyst, for certain applications the length of time required to heat up the SCR Catalyst using hot exhaust gas alone can be too long.

SCR technology relies on a chemical reaction, which occurs between 260-540°C (500-1000F) to reduce NOₓ, particles in the exhaust gas. This commonly includes the use of gaseous ammonia provided by urea solution. Injecting gaseous ammonia is important because it is used as a reactant for reducing the NOₓ emissions at the SCR.

Most emission regulations accept compliance at steady state, and in those cases, a potential 15-minute+ delay to achieve reductions is acceptable. However, certain air permits or other environmental controls may require a 1-hour average measurement or have other regulations that require a reduced delay. In these applications, the catalyst activation delay can result in non-compliance or extremely restrictive maintenance run times.

Conventional solutions use the heat of the exhaust gas flow in order to vaporize urea that is sprayed into the gas flow from a nozzle. Restated, these conventional solutions do not generate gaseous ammonia independently of the exhaust gas flow. As noted above, it can take time for the exhaust gas flow and the SCR to achieve the necessary temperature for emissions reductions. The injection of urea into the exhaust gas flow before sufficient heating has occurred can cause pooling and liquid collection within the exhaust gas system, which can cause deposits to form as well as inadequate gaseous reductant generation because of these low temperatures. Due to the location of these conventional systems within the normal engine exhaust flow, they are not well accessible due to their location within the main exhaust system.

Engines may have periodic testing to ensure they are available at short notice if needed. This periodic testing itself causes emissions, and can cause problematic elevated NOₓ emissions because engines in this situation will operate at low load (and the associated exhaust flow temperature will typically being below 250°C). Typically this would mean that the gaseous ammonia will not be formed from injected urea.

There is therefore a need for improved emission control systems including an ammonia gasifier, and associated systems and methods for improving existing emission controls.

### SUMMARY

Provided herein is an ammonia gasifier, and associated systems and methods. The present embodiments provide for gaseous ammonia generation even when the associated engine exhaust gas flow is below the normal operating temperature. This may allow for reduced NOₓ emissions across a wider range of engine operating conditions (especially at idle or low load). This may assist sites with many engines to have easier and better NOₓ emission control.

In a first aspect, there is provided an apparatus for reducing emissions in an exhaust gas flow of an engine, the apparatus comprising: a reactor vessel positioned externally from the exhaust gas flow, the reactor vessel comprising an inlet and an outlet, the outlet in communication with the exhaust gas flow; an injector positioned within the reactor vessel, the injector receiving a reductant flow from the inlet of the reactor vessel and combining the reductant flow with a pressurized gas flow to generate a reductant spray; and an ammonia generation means within the reactor vessel, the ammonia generation means generating a gaseous reductant flow from the injected reductant flow, the gaseous reductant flow transmitted into the exhaust gas flow via the outlet of the reactor vessel.

In one or more embodiments, the ammonia generation means may comprise at least one heating element positioned within the reactor vessel , the at least one heating element receiving the reductant spray to generate a gaseous reductant flow, the gaseous reductant flow transmitted into the exhaust gas flow via the outlet of the reactor vessel.

In one or more embodiments, the ammonia generation means may comprise a heated airflow stream received from a heater positioned externally from the reactor vessel, the heated airflow and the reductant spray combining within the reactor vessel to generate a gaseous reductant flow, the gaseous reductant flow transmitted into the exhaust gas flow via the outlet of the reactor vessel.

In one or more embodiments, the reactor vessel may operate independently from the exhaust gas flow.

In one or more embodiments, the reductant may comprise an aqueous urea solution.

In one or more embodiments, the gaseous reductant flow may comprise ammonia.

In one or more embodiments, the reactor vessel may have a generally vertical orientation.

In one or more embodiments, the reactor vessel may have a generally horizontal orientation.

In one or more embodiments, the plurality of high temperature heating elements may be configured to operate at a temperature above 500°C.

In one or more embodiments, the plurality of high temperature heating elements may comprise electric heating elements.

In one or more embodiments, an operating temperature of the plurality of high temperature heating elements may be independent of the temperature of the exhaust gas flow.

In one or more embodiments, the injector may comprise a concentric tube, an outer layer of the concentric tube receiving the pressurized gas flow and an inner layer of the concentric tube receiving reductant flow.

In a second aspect there is provided a system for reducing emissions in an exhaust gas flow of an engine, the system comprising: an injector positioned within a reactor vessel, the reactor vessel positioned externally from the exhaust gas flow, the injector receiving a reductant flow from an inlet of the reactor vessel at a reductant flow rate; combining the reductant flow with a pressurized gas flow to generate a reductant spray; an ammonia generation means within the reactor vessel, the ammonia generation means generating a gaseous reductant flow from the injected reductant flow, the gaseous reductant flow transmitted into the exhaust gas flow via the outlet of the reactor vessel; a pre-treatment sensor in communication with the exhaust gas flow upstream of the reactor vessel outlet; and a processor in communication with the pre-treatment sensor, the processor configured to: receive an exhaust gas flow measurement from the pre-treatment sensor; determine a revised reductant flow rate based on the exhaust gas flow measurement; transmit a signal to the injector to adjust the reductant flow rate to the revised reductant flow rate.

In one or more embodiments, the ammonia generation means may comprise at least one heating element positioned within the reactor vessel, the at least one heating element receiving the reductant spray to generate a gaseous reductant flow, the gaseous reductant flow transmitted into the exhaust gas flow via an outlet of the reactor vessel.

In one or more embodiments, the ammonia generation means may comprise a heated airflow stream received from a heater positioned externally from the reactor vessel, the heated airflow and the reductant spray combining within the reactor vessel to generate a gaseous reductant flow, the gaseous reductant flow transmitted into the exhaust gas flow via the outlet of the reactor vessel.

In one or more embodiments, the reactor vessel may operate independently from the exhaust gas flow.

In one or more embodiments, the system may further include a reductant pump upstream of the injector, wherein the processor is configured to transmit a signal to the reductant pump to adjust the reductant flow rate.

In one or more embodiments, the processor may be configured to transmit a signal to the at least one heating element to control a temperature of the reactor vessel.

In one or more embodiments, the system may further comprise a reductant valve upstream of the reactor vessel inlet, wherein the processor is configured to transmit a signal to the reductant valve to adjust the reductant flow rate to the injector.

In one or more embodiments, the pre-treatment sensor may be at least one selected from the group of: a NOx sensor, a temperature sensor, or an exhaust flow rate sensor.

In one or more embodiments, the system may further include a post treatment sensor positioned in the exhaust gas flow downstream of the reactor vessel outlet, the post-treatment sensor transmitting a gaseous reductant measurement of the exhaust gas flow to the processor.

In one or more embodiments, the processor may be configured to: determine the revised reductant flow rate based on the exhaust gas flow measurement and the gaseous concentration measurement.

In one or more embodiments, the system may further include at least one heating element sensor, each of the at least one heating element sensor capturing a corresponding heating element temperature measurement; and wherein the processor may be further configured to: receive the at least one heating element temperature measurement; determine a revised temperature set point for each of the at least one heating element based on the at least one heating element temperature measurement; and transmit the revised temperature set point to the at least one heating element.

In a third aspect, there is provided a method of reducing emissions in an exhaust gas flow, the method comprising, generating a reductant spray at an injector positioned within a reactor vessel, the reactor vessel positioned externally from the exhaust gas flow, the injector receiving a reductant flow from an inlet of the reactor vessel at a reductant flow rate and combining the reductant flow with a pressurized gas flow to generate the reductant spray; generating a gaseous reductant flow from the reductant spray by heating at least one heating element positioned within the reactor vessel, the at least one heating element receiving the reductant spray to generate the gaseous reductant flow; transmitting the gaseous reductant flow into the exhaust gas flow via an outlet of the reactor vessel; receiving, at a processor from a pre-treatment sensor in communication with the exhaust gas flow upstream of the reactor vessel outlet, an exhaust gas flow measurement; determining, at the processor, a revised reductant flow rate based on the exhaust gas flow measurement; transmitting a signal to the injector to adjust the reductant flow rate to the revised reductant flow rate.

In one or more embodiments, the method may further include: transmitting from the processor to a reductant pump, a signal to adjust the reductant flow rate.

In one or more embodiments, the method may further include: transmitting from the processor to the at least one heating element, a signal to control a temperature of the reactor vessel.

In one or more embodiments, the method may further include: transmitting from the processor to a reductant valve upstream of the reactor vessel inlet, a signal to the reductant valve to adjust the reductant flow rate to the injector.

In one or more embodiments, the pre-treatment sensor may be at least one selected from the group of: a NOx sensor, a temperature sensor, or an exhaust flow rate sensor.

In one or more embodiments, the method may further include: receiving at the processor from a post treatment sensor positioned in the exhaust gas flow downstream of the reactor vessel outlet, a gaseous reductant measurement of the exhaust gas flow.

In one or more embodiments, the method may further include: determining, at the processor, the revised reductant flow rate based on the exhaust gas flow measurement and the gaseous concentration measurement.

In one or more embodiments, the method may further include: receiving, at the processor from at least one heating element sensor, at least one heating element temperature measurement; determine a revised temperature set point for each of the at least one heating element based on the at least one heating element temperature measurement; and transmit the revised temperature set point to the at least one heating element.

### DRAWINGS

FIG. 1 shows a cross-sectional drawing of an ammonia gasifier in fluid communication with an SCR device in accordance with one or more embodiments.
FIG. 2 shows a system diagram of an exhaust system including a cross-sectional view of the ammonia gasifier in accordance with one or more embodiments.
FIG. 3 shows another system diagram of an exhaust system including a cross-sectional view of another embodiment of the ammonia gasifier in accordance with one or more embodiments.
FIG. 4 shows another system diagram of an exhaust system including a cross-sectional view of another embodiment of the ammonia gasifier in accordance with one or more embodiments.
FIG. 5 shows another system diagram of an exhaust system including a cross-sectional view of another embodiment of the ammonia gasifier in accordance with one or more embodiments.
FIG. 6 shows a system diagram including a cross-sectional diagram of an ammonia gasifier and an upstream sensor in accordance with one or more embodiments.
FIG. 7 shows another system diagram including a cross-sectional diagram of the ammonia gasifier from FIG. 6 with heating sensors in accordance with one or more embodiments.
FIG. 8 shows another system diagram including a cross-sectional diagram of the ammonia gasifier from FIG. 7 with a downstream sensor in accordance with one or more embodiments.
FIG. 9 shows a method diagram in accordance with one or more embodiments.

### DESCRIPTION OF VARIOUS EMBODIMENTS

Various embodiments will now be described below to provide an example of the claimed subject matter. No example described below limits any claimed subject matter and any claimed subject matter may cover embodiments such as systems or methods that differ from those described below.

Furthermore, it will be appreciated that for simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. In other instances, well-known methods, procedures and components have not been described in detail so as not to obscure the examples described herein. Also, the description is not to be considered as limiting the scope of the examples described herein.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term if this deviation would not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed.

Some elements herein may be identified by a part number, which is composed of a base number followed by an alphabetical or subscript-numerical suffix (e.g., 112a, or 112₁). Multiple elements herein may be identified by part numbers that share a base number in common and that differ by their suffixes (e.g., 112₁, 112₂, and 112₃). All elements with a common base number may be referred to collectively or generically using the base number without a suffix (e.g., 112).

The example systems and methods described herein may be implemented in hardware or software, or a combination of both. In some cases, the examples described herein may be implemented, at least in part, by using one or more computer programs, executing on one or more programmable devices comprising at least one processing element, a data storage element (including volatile and non-volatile memory and/or storage elements), and at least one communication interface. These devices may also have at least one input device (e.g., a keyboard, a mouse, a touchscreen, and the like), and at least one output device (e.g., a display screen, a printer, a wireless radio, and the like) depending on the nature of the device. For example, and without limitation, the programmable devices (referred to below as computing devices) may be a server, network appliance, embedded device, computer expansion module, a personal computer, laptop, personal data assistant, cellular telephone, smart-phone device, tablet computer, a wireless device or any other computing device capable of being configured to carry out the methods described herein.

In some examples, the communication interface may be a network communication interface. In examples in which elements are combined, the communication interface may be a software communication interface, such as those for inter-process communication (IPC). In still other examples, there may be a combination of communication interfaces implemented as hardware, software, and a combination thereof.

Program code may be applied to input data to perform the functions described herein and to generate output information. The output information is applied to one or more output devices, in known fashion.

Each program may be implemented in a high-level procedural, declarative, functional or object-oriented programming and/or scripting language, or both, to communicate with a computer system. However, the programs may be implemented in assembly or machine language, if desired. In any case, the language may be a compiled or interpreted language. Each such computer program may be stored on a storage media or a device (e.g., ROM, magnetic disk, optical disc) readable by a general or special purpose programmable computer, for configuring and operating the computer when the storage media or device is read by the computer to perform the procedures described herein. Examples of the system may also be considered to be implemented as a non-transitory computer-readable storage medium, configured with a computer program, where the storage medium so configured causes a computer to operate in a specific and predefined manner to perform the functions described herein.

Furthermore, the example system, processes and methods are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloads, magnetic and electronic storage media, digital and analog signals, and the like. The computer useable instructions may also be in various forms, including compiled and non-compiled code.

Various examples of systems, methods and computer programs products are described herein. Modifications and variations may be made to these examples without departing from the scope of the invention, which is limited only by the appended claims. Also, in the various user interfaces illustrated in the figures, it will be understood that the illustrated user interface text and controls are provided as examples only and are not meant to be limiting. Other suitable user interface elements may be used with alternative implementations of the systems and methods described herein.

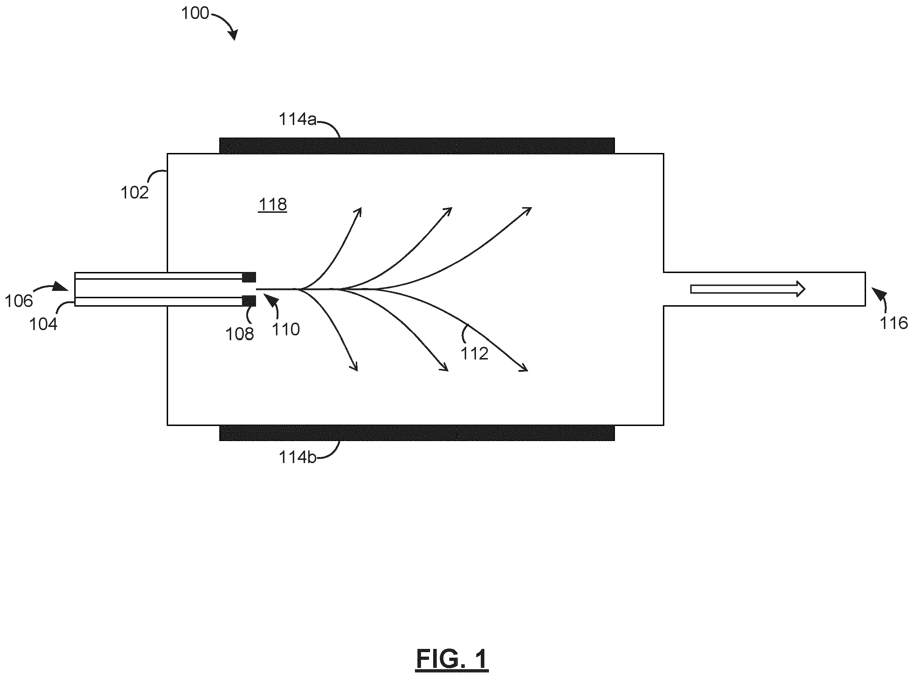

Referring first to FIG. 1, there is shown a cross-sectional drawing 100 of an ammonia gasifier in fluid communication with an SCR device in accordance with one or more embodiments. The ammonia gasifier 100 includes a reactor vessel 102 having an outlet 116, an injector 104 including an inlet 106, and one or more ammonia generation means 114. The inlet 106 receives liquid ammonia or urea from an ammonia supply means (not shown) into the reactor vessel 102 via injector 104.

The exhaust gas flow may proceed in an exhaust gas vent (not shown) that outlet 116 is connected to in order to deliver gaseous ammonia into the exhaust gas flow. The exhaust gas flow may be from an engine, a boiler, or another combustion device as known. The exhaust gas flow may contain varying amounts of NOₓ components, particulate matter, and other emissions to the atmosphere that are desirably controlled. The outlet end 116 of the gasifier may be connected in an exhaust gas vent upstream of one or more emission control devices such as Selective Catalytic Reduction devices (SCR devices) and other types of emission control devices. The gasifier 100 operates independently of the exhaust gas flow, that is, externally from the exhaust gas flow and by providing it's own ammonia generation means separate from the heating provided from the exhaust gas flow.

The reactor vessel 102 may be cylindrical, rectangular, or another shape with an internal space 118 where the injected urea 112 converted to gaseous ammonia. This may include, for example, injector 108 spraying the liquid urea solution 112 at a nozzle end 110 of the injector into the internal space 118 and generating gaseous ammonia using the one or more ammonia generation means 114. The reactor vessel 102 may be made from aluminum, steel, or an alloy. The reactor vessel 102, the injector 104, and the outlet 116 may be insulated from its environment, including using fiberglass insulation or another type of thermal insulation.

The reactor vessel 102 may further include a hydrolysis catalyst to assist the urea to gaseous ammonia conversion, for example, the hydrolysis catalyst may be at the outlet end 116 of the reactor vessel 102.

The reactor vessel 102 may be oriented in a vertical direction relative to the exhaust gas flow. In an alternate embodiment, the reactor vessel 102 may be oriented in a horizontal direction relative to the exhaust gas flow.

An injector 104 delivers aqueous ammonia or urea from an ammonia supply means into the reactor vessel 102. The injector 104 may be inserted into the reactor vessel 102 along its axis. The aqueous ammonia supply or urea is delivered to an inlet end 106 of the injector 108.

The injector 104 may be a cylindrical tube, and may include threaded connectors on the inlet end 106 for connecting a pump means or a pressurized supply of liquid urea solution.

The inlet 106 of injector 104 receives liquid urea and using the nozzle 108 sprays the liquid urea into the reactor vessel 102. The liquid urea may be pressurized and may be provided by a pump or another means to the inlet 106.

The nozzle end 110 of the injector 104 disperses or atomizes the liquid urea into small droplets within the reactor vessel 102 using nozzle 108. The nozzle 108 may be a commercially available nozzle that produces fine droplets. The injector 104 may further include a concentric tube around the nozzle 108 carrying pressurized air. The outer concentric tube of injector 104 may carry pressurized air and the inner concentric tube of injector 104 may carry the liquid urea. The pressurized air in the outer concentric tube of the injector 104 urges the urea spray generated by the nozzle 108 into the reactor vessel 102. The outer concentric tube of injector 104 may serve a second purpose by cooling the injector 104 to reduce early evaporation of the liquid urea before it passes through the nozzle 108.

The liquid urea may be provided by a pump or other means to the inlet 106 of the injector 104. The urea solution may include a urea salt dissolved in water at varying concentrations as required for emissions control purposes.

The one or more ammonia generation means 114 may include one or more heating elements such as electrically powered heating elements. The ammonia generation means 114 may include at least one heating element positioned within the reactor vessel, the at least one heating element receiving the reductant spray to generate a gaseous reductant flow, the gaseous reductant flow transmitted into the exhaust gas flow via the outlet of the reactor vessel. The one or more ammonia generation means may include one or more high temperature heating elements configured to operate at a temperature above 500°C. The one or more high temperature heating elements may include electric heating elements. The operating temperature of the one or more high temperature heating elements may be independent of the temperature of the exhaust gas flow.

In another embodiment, the ammonia generation means 114 may be external to the reactor vessel 102. For example, the heating elements may instead heat the reactor vessel 102 itself instead of being positioned within the reactor vessel 102.

In another embodiment, the ammonia generation means 114 may include a heated airflow stream received from a heater (such as an external electrical heater) positioned externally from the reactor vessel 102, the heated airflow and the reductant spray combining within the reactor vessel to generate a gaseous reductant flow, the gaseous reductant flow transmitted into the exhaust gas flow via the outlet of the reactor vessel. The heated airflow stream may be provided within the outer concentric tub of injector 104 and combined with the liquid urea spray 112 provided by nozzle 108 into internal space 118.

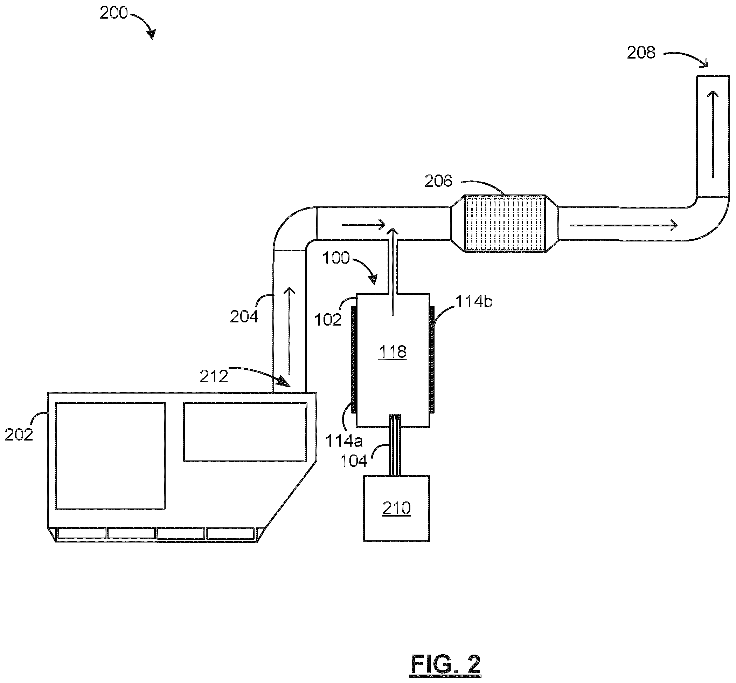

Referring next to FIG. 2, there is shown a system diagram of an exhaust system 200 including a cross-sectional view of the ammonia gasifier in accordance with one or more embodiments. The exhaust system 200 is in fluid communication with a combustion device 202 in accordance with one or more embodiments. The exhaust system 200 includes an inlet end 212 of the exhaust duct 204 receiving exhaust from the combustion device 202, a selective catalytic reduction (SCR) device 206 in fluid communication with the inlet end 212 of exhaust duct 204, an ammonia gasifier 100 in fluid communication with the exhaust system 200, and an outlet end 208 of the exhaust duct 204 venting to the atmosphere. The exhaust from the combustion device 202 progresses through the inlet end 212 of exhaust duct 204, joins the flow of gaseous ammonia from gasifier 100, engages the SCR device 206 to reduce emissions in conjunction with the gaseous ammonia added by gasifier 100, and then is exhausted to the environment at outlet end 208 of exhaust vent 204.

The combustion device 202 may be a boiler, generator or an internal combustion engine. The combustion device 202 may generate an exhaust flow that is received by the inlet end 212 of the exhaust vent 204 for emissions reduction.

The ammonia gasifier 100 (see e.g. FIG. 1) is in fluid communication with an exhaust system 200 as the exhaust system 200, which generally discharges an unpurified exhaust-gas flow from a combustion device 202. The inlet end 212 of exhaust duct 204 is in fluid communication with the SCR device 206, and the outlet end 208 of the exhaust duct 204 is in fluid communication with the SCR device 206 opposite of the inlet end 212 of the exhaust duct 204 so that the SCR device 206 can function as an emission controlling device within the exhaust system 200. The SCR device 206 transforms nitrogen oxides (NOₓ) of the unpurified exhaust-gas flow into diatomic nitrogen (N₂) and water vapor with the aid of the catalyst and a reductant agent.

In one embodiment, a Diesel Particulate Filter (DPF) may be provided in the exhaust duct either upstream of the ammonia gasifier 100 or downstream of the ammonia gasifier 100.

In one embodiment, the conventional configuration of ammonia generation is used and the reductant agent is added into the unpurified exhaust-gas flow with a reductant injector of the SCR device 206. The exhaust gas flow within the exhaust duct heats and converts the reductant agent to a gaseous reductant agent ahead of the SCR device 206. The reductant agent can perform a chemical reaction with the NOₓ in the exhaust gas in order to convert the NOₓ, into N₂ and water vapor in the SCR device 206.

In another embodiment, the ammonia gasifier 100 is used to generate gaseous that is added into the unpurified exhaust-gas flow ammonia ahead of the SCR device 206. The ammonia gasifier 100 may controlled using a control system that may selectively enable and disable the gasifier as required. For example, the ammonia gasifier 100 may be enabled during startup of the combustion device 202 while the temperature of the exhaust system is below the temperature threshold required to generate gaseous ammonia in a conventional configuration. This may provide for emission reduction during the startup of the combustion device 202.

The reductant agent may be, for example, aqueous ammonia or a liquid urea solution that is injected and vaporized to form gaseous ammonia. The reductant agent may be provided to gasifier 100 via injector 104 from an ammonia supply means 210.

The ammonia supply means 210 may include a pump, or a pressurized vessel designed to deliver a flow of liquid reductant such as urea from a reservoir to the injector 104 of gasifier 100. The injector may generate a spray of droplets of the liquid reductant within the internal space 118 of the reactor vessel 102 where it may be converted to a gaseous reductant such as gaseous ammonia by heating of the one or more ammonia generation means 114. The ammonia supply means 210 may deliver liquid reductant to the gasifier 100 via a valve, or another control mechanism.

In the embodiment shown in FIG. 2, the ammonia gasifier 100 may be oriented vertically relative to the SCR device 206.

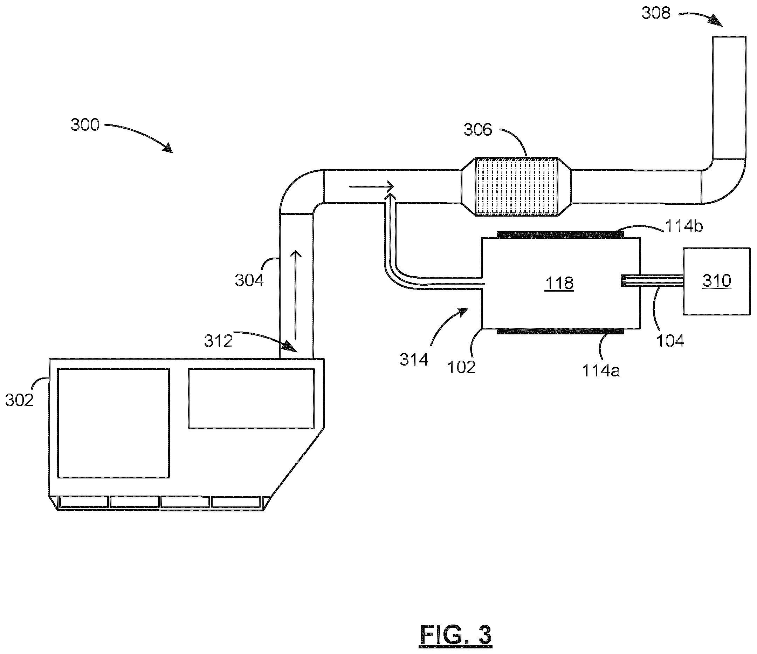

In another embodiment, as shown in FIG. 3, the ammonia gasifier 300 may be oriented horizontally relative to the SCR device 206.

The SCR device 206 may be pre-heated using a pre-heat system.

Referring next to FIG. 3, there is shown another system diagram 300 of the exhaust system including a cross-sectional view of the ammonia gasifier 314 in a horizontal configuration accordance with one or more embodiments. In FIG. 2 and FIG. 3, like elements have been given like reference numbers. For example, combustion device 302 in FIG. 3 generally corresponds to combustion device 202 in FIG. 2.

The exhaust system 300 is in fluid communication with a combustion device 302 in accordance with one or more embodiments. The exhaust system 300 includes an inlet end 312 of the exhaust duct 304 receiving exhaust from the combustion device 302, a selective catalytic reduction (SCR) device 306 in fluid communication with the inlet end 312 of exhaust duct 304, an ammonia gasifier 314 in fluid communication with the exhaust system 300, and an outlet end 308 of the exhaust duct 304 venting to the atmosphere. The exhaust from the combustion device 302 progresses through the inlet end 312 of exhaust duct 304, joins the flow of gaseous ammonia from gasifier 314, engages the SCR device 306 to reduce emissions in conjunction with the gaseous ammonia added by gasifier 314, and then is exhausted to the environment at outlet end 308 of exhaust vent 304.

The gasifier 314 corresponds to the gasifier 100 in FIG. 1 in a horizontal configuration relative to the SCR device 306.

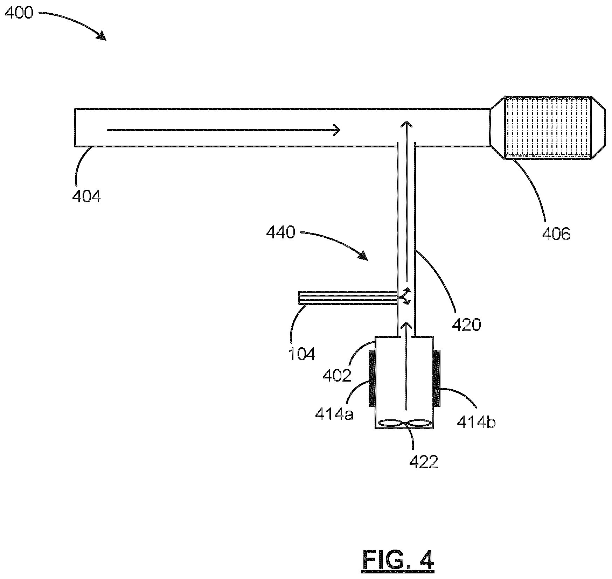

Referring next to FIG. 4 shows another system diagram 400 of an exhaust system including an ammonia gasifier 402 in accordance with one or more embodiments. In this embodiment the gasifier 440 includes an external heat source 402. For example, the external heat source 402 may include one or more heating elements 414. The external heat source 402 may further include a fan 422, or a positive air pressure supply to urge hot air into the reactor vessel 420. The reactor vessel 420 may receive the hot air supply from the external heat source 402 and a spray of liquid reductant from injector 104. The reactor vessel 420 delivers the gaseous ammonia into the exhaust vent 404. The reactor vessel 420 is heated in order to generate gaseous ammonia from the liquid reductant delivered from the injector 104.

The liquid reductant from injector 104 is sprayed into reactor vessel 420 and gaseous ammonia is produced and urged into the exhaust duct 404 upstream of an SCR device 406.

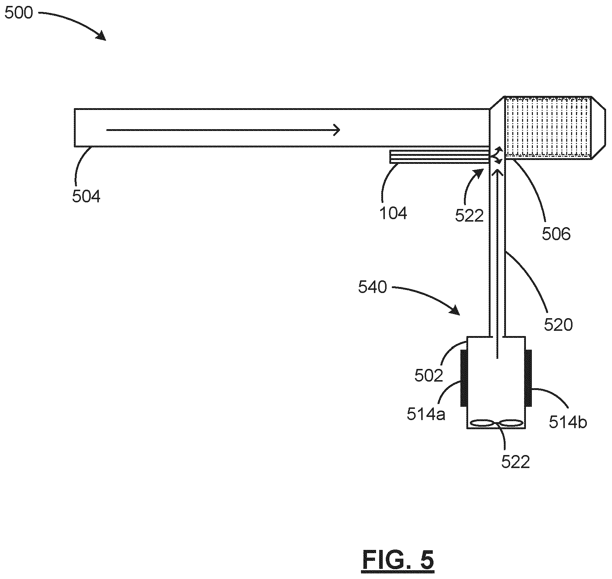

Referring next to FIG. 5, there is shown another system diagram 500 including a cross-sectional view of an ammonia gasifier 540 in accordance with one or more embodiments. In this embodiment the gasifier 540 includes an external heat source 502. For example, the external heat source 502 may include one or more heating elements 514. The external heat source 502 may further include a fan 522, or a positive air pressure supply to urge hot air into the reactor vessel 520. The reactor vessel 520 may receive the hot air supply from the external heat source 502 and a spray of liquid reductant from injector 104. The reactor vessel 520 delivers the gaseous ammonia into the SCR device itself, for example into the SCR reaction vessel. The reactor vessel 520 is heated in order to generate gaseous ammonia from the liquid reductant delivered from the injector 104. This embodiment may provide that any resulting deposits generated when the liquid reductant is converted into gaseous reductant are deposited within the SCR device 506.

The liquid reductant from injector 104 is sprayed into reactor vessel 520 and gaseous ammonia is produced and urged into the SCR device 506 itself.

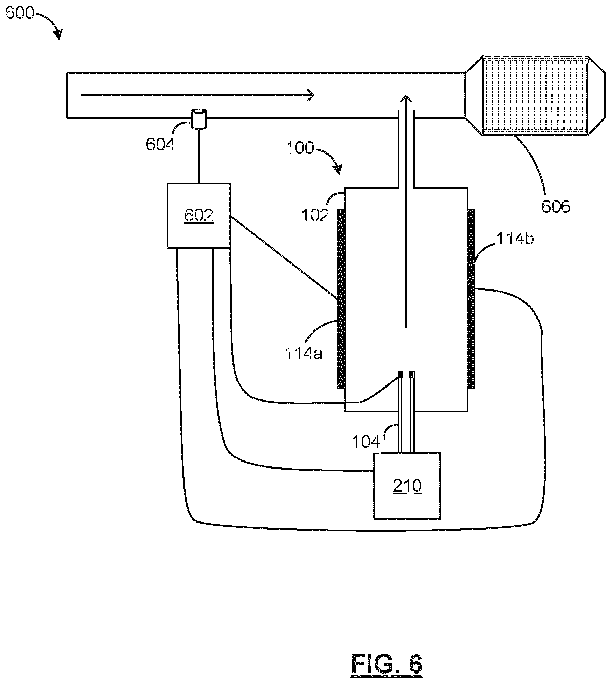

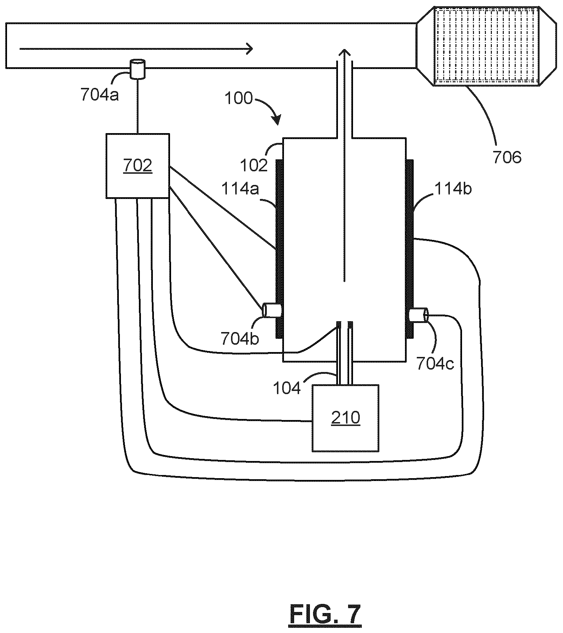

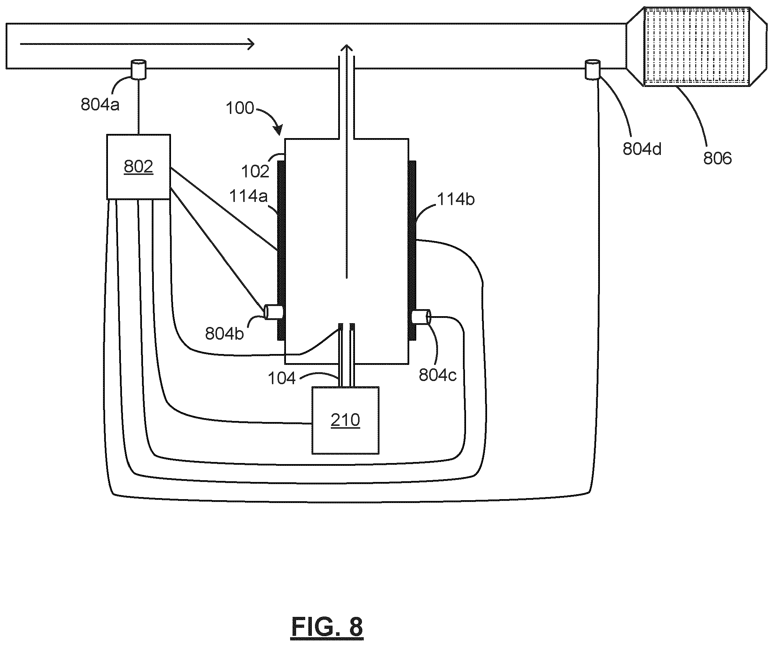

Referring next to FIGs. 6 - 8 together, there are system diagrams shown 600, 700 and 800 respectively including a cross-sectional diagram of the ammonia gasifier 100, sensors 604, 704 and 804 respectively, and control systems 602, 702 and 802 respectively in accordance with one or more embodiments.

The control system 602 may be a controller, processor, or another computer-based system for operating the exhaust system in order to reduce emissions by controlling the gasifier 100 and the liquid ammonia supply means 210 to generate gaseous ammonia that is provided into the exhaust vent ahead of the SCR device 606. The control system 602 is connected to one or more sensors 604, the liquid ammonia supply means 210, and the one or more heating elements 114.

The one or more sensors 604 may include temperature sensors, NOx concentration sensors, ammonia concentration sensors, or other sensors as are known. The sensor 604 may be referred to herein as a pre-treatment sensor, and may be positioned upstream in the exhaust gas flow from the gasifier 100 and the SCR device 606.

The SCR device 606 may be the SCR device 106 (see FIG. 1).

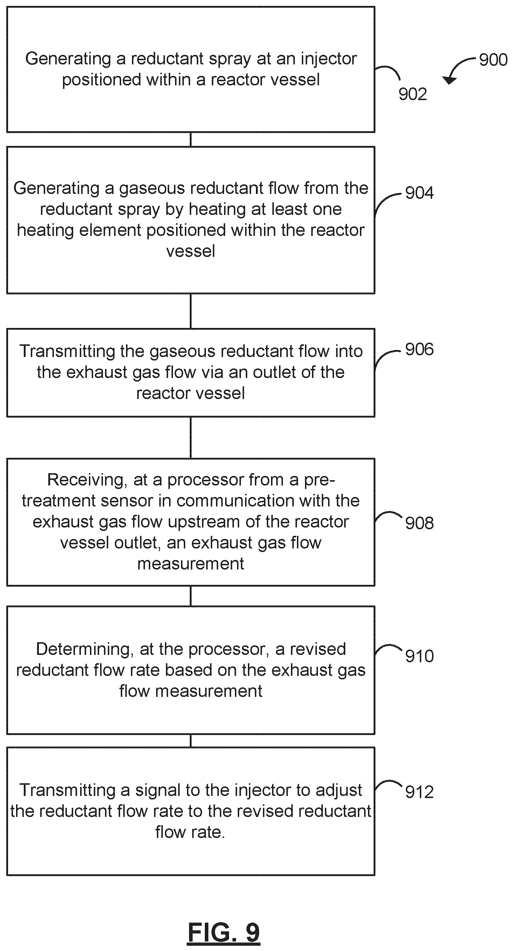

The control system 602 may use the method of FIG. 9 to control the operation of the exhaust system including the gasifier 100. The control system 602 receives data from the one or more sensors 604. This data may be used by the control system 602 in order to control the operation of the at least one heating element 114. For example, the control system 602 may increase or decrease the electrical power supply to the at least one heating element based on a control algorithm using the data from sensor 604. In order to control the at least one heating element 114, the control system 602 may send a signal to an independent heating device associated with the at least one heating element 114.

The data may be used by the control system 602 in order to control the operation of the liquid reductant supply means 210. This may include increasing, decreasing, or maintaining a flow rate of the liquid reductant provided by a reductant pump to the injector 104. This may also include adjusting the flow rate of the liquid reductant within the inner concentric tube of the injector 104. This may also include increasing, decreasing, or maintaining a flow rate of the compressed air provided by a separate pump, or from a compressed air source within the outer concentric tub of the injector 104. In one embodiment, the liquid reductant supply means 210 may be provided to the injector 104 from a pressurized source or reservoir, and instead of controlling the operation of the pump 210 the control system 602 controls the activation of a valve connected between the pressurized source and the injector 104.

The control system 702 may be a controller, processor, or another computer-based system for operating the exhaust system in order to reduce emissions by controlling the gasifier 100 and the liquid ammonia supply means 210 to generate gaseous ammonia that is provided into the exhaust vent ahead of the SCR device 706. The control system 702 is connected to one or more sensors 704, the liquid ammonia supply means 210, and the one or more heating elements 114. The control system 702 may include the features and structure of the control system 602, with additional control algorithms that receive sensor data from the temperature sensors 704b and 704c.

The one or more sensors 704 may include temperature sensors, NOx concentration sensors, ammonia concentration sensors, or other sensors as are known. The sensor 704a may be referred to herein as a pre-treatment sensor and may be positioned upstream in the exhaust gas flow from the gasifier 100 and the SCR device 706. The sensors 704b and 704c may be referred to herein as heating element sensors and may be positioned to measure the temperature of the one or more heating elements 114 in the gasifier 100.

The SCR device 706 may be the SCR device 106 (see FIG. 1).

The control system 702 may use the method of FIG. 9 to control the operation of the exhaust system including the gasifier 100. The control system 702 receives data from the one or more sensors 704, including the pre-treatment sensor 704a, and the at least one heating element sensor 704b and 704c. This data may be used by the control system 702 in order to control the operation of the at least one heating element 114. For example, the control system 702 may increase or decrease the electrical power supply to the at least one heating element based on a control algorithm using the data from sensors 704a, 704b and 704c. In order to control the at least one heating element 114, the control system 702 may send a signal to an independent heating device associated with the at least one heating element 114.

The data may be used by the control system 702 in order to control the operation of the liquid reductant supply means 210. This may include increasing, decreasing, or maintaining a flow rate of the liquid reductant provided by a reductant pump to the injector 104. This may also include adjusting the flow rate of the liquid reductant within the inner concentric tube of the injector 104. This may also include increasing, decreasing, or maintaining a flow rate of the compressed air provided by a separate pump, or from a compressed air source within the outer concentric tub of the injector 104. In one embodiment, the liquid reductant supply means 210 may be provided to the injector 104 from a pressurized source or reservoir, and instead of controlling the operation of the pump 210 the control system 702 controls the activation of a valve connected between the pressurized source and the injector 104.

The control system 802 may be a controller, processor, or another computer-based system for operating the exhaust system in order to reduce emissions by controlling the gasifier 100 and the liquid ammonia supply means 210 to generate gaseous ammonia that is provided into the exhaust vent ahead of the SCR device 806. The control system 802 is connected to one or more sensors 804, the liquid ammonia supply means 210, and the one or more heating elements 114. The control system 802 may include the features and structure of the control system 802, with additional control algorithms that receive sensor data from the post-treatment sensor 804d.

The one or more sensors 804 may include temperature sensors, NOx concentration sensors, ammonia concentration sensors, or other sensors as are known. The sensor 804a may be referred to herein as a pre-treatment sensor and may be positioned upstream in the exhaust gas flow from the gasifier 100 and the SCR device 806. The sensors 804b and 804c may be referred to herein as heating element sensors and may be positioned to measure the temperature of the one or more heating elements 114 in the gasifier 100. The sensor 804d may be referred to herein as the post-treatment sensor and may be positioned to measure the post-treatment exhaust gas flow downstream of gasifier 100 and upstream of SCR device 806.

The SCR device 806 may be the SCR device 106 (see FIG. 1).

The control system 802 may use the method of FIG. 9 to control the operation of the exhaust system including the gasifier 100. The control system 802 receives data from the one or more sensors 804, including the pre-treatment sensor 804a, the at least one heating element sensor 804b and 804c, and the post-treatment sensor 804d. This data may be used by the control system 802 in order to control the operation of the at least one heating element 114. For example, the control system 802 may increase or decrease the electrical power supply to the at least one heating element based on a control algorithm using the data from sensors 804a, 804b, 804c and 804d. In order to control the at least one heating element 114, the control system 802 may send a signal to an independent heating device associated with the at least one heating element 114.

The data may be used by the control system 802 in order to control the operation of the liquid reductant supply means 210. This may include increasing, decreasing, or maintaining a flow rate of the liquid reductant provided by a reductant pump to the injector 104. This may also include adjusting the flow rate of the liquid reductant within the inner concentric tube of the injector 104. This may also include increasing, decreasing, or maintaining a flow rate of the compressed air provided by a separate pump, or from a compressed air source within the outer concentric tub of the injector 104. In one embodiment, the liquid reductant supply means 210 may be provided to the injector 104 from a pressurized source or reservoir, and instead of controlling the operation of the pump 210 the control system 802 controls the activation of a valve connected between the pressurized source and the injector 104.

Referring next to FIG. 9, there is shown a method diagram 900 in accordance with one or more embodiments. Method 900 is a method of reducing emissions in an exhaust gas flow.

At 902, generating a reductant spray at an injector positioned within a reactor vessel, the reactor vessel positioned externally from the exhaust gas flow, the injector receiving a reductant flow from an inlet of the reactor vessel at a reductant flow rate and combining the reductant flow with a pressurized gas flow to generate the reductant spray.

At 904, generating a gaseous reductant flow from the reductant spray by heating at least one heating element positioned within the reactor vessel, the at least one heating element receiving the reductant spray to generate the gaseous reductant flow.

At 906, transmitting the gaseous reductant flow into the exhaust gas flow via an outlet of the reactor vessel.

At 908, receiving, at a processor from a pre-treatment sensor in communication with the exhaust gas flow upstream of the reactor vessel outlet, an exhaust gas flow measurement.

At 910, determining, at the processor, a revised reductant flow rate based on the exhaust gas flow measurement.

At 912, transmitting a signal to the injector to adjust the reductant flow rate to the revised reductant flow rate.

In one or more embodiments, the method may further include transmitting from the processor to a reductant pump, a signal to adjust the reductant flow rate.

In one or more embodiments, the method may further include transmitting from the processor to the at least one heating element, a signal to control a temperature of the reactor vessel.

In one or more embodiments, the method may further include transmitting from the processor to a reductant valve upstream of the reactor vessel inlet, a signal to the reductant valve to adjust the reductant flow rate to the injector.

In one or more embodiments, the pre-treatment sensor may be at least one selected from the group of: a NOx sensor, a temperature sensor, or an exhaust flow rate sensor.

In one or more embodiments, the method may further include receiving at the processor from a post treatment sensor positioned in the exhaust gas flow downstream of the reactor vessel outlet, a gaseous reductant measurement of the exhaust gas flow.

In one or more embodiments, the method may further include determining, at the processor, the revised reductant flow rate based on the exhaust gas flow measurement and the gaseous concentration measurement.

In one or more embodiments, the method may further include receiving, at the processor from at least one heating element sensor, at least one heating element temperature measurement; determining a revised temperature set point for each of the at least one heating element based on the at least one heating element temperature measurement; and transmitting the revised temperature set point to the at least one heating element.

The present invention has been described here by way of example only. Various modification and variations may be made to these exemplary embodiments without departing from the scope of the invention, which is limited only by the appended claims.

## Claims

1. An apparatus for reducing emissions in an exhaust gas flow of an engine, the apparatus comprising:
- a reactor vessel positioned externally from the exhaust gas flow, the reactor vessel comprising an inlet and an outlet, the outlet in communication with the exhaust gas flow;
- an injector positioned within the reactor vessel, the injector receiving a reductant flow from the inlet of the reactor vessel and combining the reductant flow with a pressurized gas flow to generate a reductant spray; and
- an ammonia generation means within the reactor vessel, the ammonia generation means generating a gaseous reductant flow from the injected reductant flow, the gaseous reductant flow transmitted into the exhaust gas flow via the outlet of the reactor vessel.

2. The apparatus of claim 1 wherein the ammonia generation means comprises at least one heating element positioned within the reactor vessel, the at least one heating element receiving the reductant spray to generate a gaseous reductant flow, the gaseous reductant flow transmitted into the exhaust gas flow via the outlet of the reactor vessel.

3. The apparatus of claim 1 wherein the ammonia generation means comprises a heated airflow stream received from a heater positioned externally from the reactor vessel, the heated airflow and the reductant spray combining within the reactor vessel to generate a gaseous reductant flow, the gaseous reductant flow transmitted into the exhaust gas flow via the outlet of the reactor vessel; and wherein the reactor vessel operates independently from the exhaust gas flow.

4. The apparatus of any one of claims 1 to 3, wherein the reductant comprises an aqueous urea solution.

5. The apparatus of any one of claims 1 to 4, wherein the gaseous reductant flow comprises ammonia.

6. The apparatus of any one of claims 1 to 5, wherein the one or more ammonia generation means comprise one or more high temperature heating elements configured to operate at a temperature above 500°C; and wherein an operating temperature of the one or more high temperature heating elements is independent of the temperature of the exhaust gas flow.

7. The apparatus of any one of claims 1 to 6 wherein the injector comprises a concentric tube, an outer layer of the concentric tube receiving the pressurized gas flow and an inner layer of the concentric tube receiving reductant flow.

8. A system for reducing emissions in an exhaust gas flow of an engine, the system comprising
- an injector positioned within a reactor vessel, the reactor vessel positioned externally from the exhaust gas flow, the injector receiving a reductant flow from an inlet of the reactor vessel at a reductant flow rate and combining the reductant flow with a pressurized gas flow to generate a reductant spray;
- an ammonia generation means within the reactor vessel, the ammonia generation means generating a gaseous reductant flow from the injected reductant flow, the gaseous reductant flow transmitted into the exhaust gas flow via the outlet of the reactor vessel;
- a pre-treatment sensor in communication with the exhaust gas flow upstream of the reactor vessel outlet; and
- a processor in communication with the pre-treatment sensor, the processor configured to:
- receive an exhaust gas flow measurement from the pre-treatment sensor;
- determine a revised reductant flow rate based on the exhaust gas flow measurement;
- transmit a signal to the injector to adjust the reductant flow rate to the revised reductant flow rate.

9. The system of claim 8 wherein the ammonia generation means comprises at least one heating element positioned within the reactor vessel, the at least one heating element receiving the reductant spray to generate a gaseous reductant flow, the gaseous reductant flow transmitted into the exhaust gas flow via an outlet of the reactor vessel.

10. The system of claim 8 wherein the ammonia generation means comprises a heated airflow stream received from a heater positioned externally from the reactor vessel, the heated airflow and the reductant spray combining within the reactor vessel to generate a gaseous reductant flow, the gaseous reductant flow transmitted into the exhaust gas flow via the outlet of the reactor vessel; and wherein the reactor vessel operates independently from the exhaust gas flow.

11. The system of any one of claims 8 to 10, further comprising a reductant pump upstream of the injector, wherein the processor is configured to transmit a signal to the reductant pump to adjust the reductant flow rate.

12. The system of any one of claims 8 to 11, wherein the processor is configured to transmit a signal to the at least one heating element to control a temperature of the reactor vessel.

13. The system of any one of claims 8 to 12, further comprising a reductant valve upstream of the reactor vessel inlet, wherein the processor is configured to transmit a signal to the reductant valve to adjust the reductant flow rate to the injector.

14. The system of any one of claims 8 to 13, wherein the pre-treatment sensor is at least one selected from the group of: a NOx sensor, a temperature sensor, or an exhaust flow rate sensor.

15. The system of any one of claims 8 to 14, further comprising a post treatment sensor positioned in the exhaust gas flow downstream of the reactor vessel outlet, the post-treatment sensor transmitting a gaseous reductant measurement of the exhaust gas flow to the processor; and wherein the processor is configured to: determine the revised reductant flow rate based on the exhaust gas flow measurement and the gaseous concentration measurement.

16. The system of any one of claims 8 to 15, further comprising at least one heating element sensor, each of the at least one heating element sensor capturing a corresponding heating element temperature measurement; and wherein the processor is further configured to:
- receive the at least one heating element temperature measurement;
- determine a revised temperature set point for each of the at least one heating element based on the at least one heating element temperature measurement; and
- transmit the revised temperature set point to the at least one heating element.
